(19) **Europäisches Patentamt**
**European Patent Office**
**Office européen des brevets**

(11) **EP 2 618 560 B1**

(12) **EUROPEAN PATENT SPECIFICATION**

(45) Date of publication and mention
of the grant of the patent:
**03.08.2016 Bulletin 2016/31**

(51) Int Cl.:
*H04N 5/361* *(2011.01)*

(21) Application number: **12151482.2**

(22) Date of filing: **18.01.2012**

(54) **Dark current correction for shutterless cameras**

Dunkelstromkorrektur für blendenfreie Kameras

Correction d'obscurité pour caméras sans obturateur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.07.2013 Bulletin 2013/30**

(73) Proprietor: **Harvest Imaging bvba
3960 Bree (BE)**

(72) Inventor: **Theuwissen, Albert
3960 Bree (BE)**

(74) Representative: **Hertoghe, Kris Angèle Louisa et al
DenK iP bvba
Hundelgemsesteenweg 1114
9820 Merelbeke (BE)**

(56) References cited:
**WO-A1-99/62023      WO-A1-2005/073682
DE-A1- 4 309 724     US-A1- 2008 231 725**

Printed by Jouve, 75001 PARIS (FR)

## Description

## Field of the invention

The present invention relates to the field of image sensing, such as medical imaging, automotive imaging, machine vision, night vision, digital photography or digital camcorder imaging. More specifically it relates to methods and devices for dark current and fixed-pattern noise correction of images obtained from an image sensor.

## Background of the invention

An image sensor, for example a complementary metal oxide semiconductor active pixel sensor (CMOS-APS) or charged coupled device (CCD), typically comprises a plurality of sensing elements which generate an electric signal in response to exposure to radiation, e.g. exposure to visible light. Many of such sensing elements may accumulate an electric signal even in the absence of exposure. The electric charge that accumulates in a sensing element in the absence of radiation exposure is known in the art as dark current. In an imaging sensor, the dark current components of the individual sensing elements may be represented as an image, commonly referred to as a dark frame.

Dark frame subtraction is a method for compensating for this dark current component by subtracting a dark frame, e.g. an unexposed image, from an actual image frame, to result in final dark-current corrected image. The dark current component may be a form of systematic, structured noise, but is dependent on image acquisition, e.g. exposure time, and on environmental factors, e.g. particularly ambient temperature. Therefore, in dark frame subtraction methods known in the art, the dark frame may be obtained under substantially similar conditions and with similar acquisition settings, for example immediately preceding or following the acquisition of the image frame. This may, however, complicate the acquisition of serial images, e.g. in motion video capture, and may require means for obscuring the image sensor, e.g. a mechanical shutter, which are not always present in all types of cameras.

US 6,714,241 discloses a method for dark current subtraction which enables a dark reference frame to be reused for dark current subtraction for multiple image frames. The dark reference frame is taken during fabrication of the camera and is stored in a digital frame store present in the camera. This dark reference frame is reused by scaling it according to changes in the dark current levels associated with the dark frame and the image frames. Hereto, a gain factor is calculated as being the ratio between the average dark current in the dark reference lines of the dark reference frame, to the average dark current in the dark reference lines of the actual video frame. This gain factor is applied to the dark reference frame, thus yielding an updated dark reference frame which is subtracted from the actual video frame to result in a final dark current corrected image. The disclosed technique relies on the fact that the dark current and its dark current non-uniformities can be corrected in a linear way over a range of environmental conditions and/or acquisition settings. However, it has been found out that dark current does not scale proportionally in response to such changing conditions such as temperature changes and different exposure times.

International patent application WO 99/62023 discloses a method of adjusting a portion of a dark frame in accordance with compensation values related to dark reference pixels pf a picture frame to obtain an adjusted dark frame portion, and then subtracting the adjusted dark frame portion from a corresponding picture frame portion.

International patent application WO 2005/073682 discloses a method for compensation of a dark current pattern in optical detector arrays. This is accomplished by providing a database of dark signal readings unique to a particular detector, which can be used to correct a measured signal. The database may comprise dark signal readings for each pixel, taken from a range of temperatures and exposure times, and may be created at the time of manufacture. The detector also comprises a means to measure its temperature, so that the appropriate dark signal values can be selected (or calculated via linear interpolation) from the database, and then subtracted from the measured signal.

United States patent application US 2008/0231725 discloses an image capturing apparatus adapted for storing image capturing conditions, for storing a plurality of pieces of dark-time image data captured under the image capturing conditions in a light-shielded state, and for storing bright-time image data captured in the light-unshielded state. A dark-time image data extracting unit is provided for extracting a dark-time image captured under an image capturing condition corresponding to an image capturing condition under which the bright-time image is captured. A correcting unit is provided for correcting the bright-time image data based on the dark-time image data extracted by the dark-time image data extracting unit.

## Summary of the invention

It is an object of embodiments of the present invention to provide good dark current correction of images obtained from an image sensor.

The above objective is accomplished by a method and device according to the present invention.

In a first aspect, the present invention provides a method for dark current correction. The method comprises the step of obtaining a plurality of dark images from an image sensor, wherein the plurality of dark images correspond to a plurality of ambient conditions, wherein each of the plurality of dark images corresponds to a different reference ambient temperature and/or to a different exposure time. The method further comprises the step of obtaining an image frame from this image sensor. The method further comprises the steps of determining a transformation of at least one dark image out of the plurality of dark images taking into account at least one dark pixel signal in the image frame, applying this transformation to the at least one dark image to obtain a dark current frame, and subtracting the dark current frame from the image frame to obtain a dark current corrected image frame. The determining of the transformation comprises determining a plurality of difference values, in which the plurality of difference values comprises a difference value for each dark image of the plurality of dark images. This difference value is representative of a difference between the at least one dark pixel signal in the image frame and a corresponding at least one pixel signal in the dark image.

Determining of the transformation comprises selecting the at least one dark image out of the plurality of dark images taking into account the at least one dark pixel signal in the image frame.

In a method according to embodiments of the present invention, determining of the transformation may comprise determining a pixelwise linear transformation of the at least one dark image taking into account the at least one dark pixel signal in the image frame.

In a method according to embodiments of the present invention, determining of the transformation may comprise determining a combination of at least two of the plurality of dark images taking into account the at least one dark pixel signal.

In a method according to embodiments of the present invention, determining of the transformation may comprise determining a plurality of difference values, each difference value being representative of a difference between the at least one dark pixel signal in the image frame and a corresponding at least one pixel signal in one of the plurality of dark images.

In a method according to embodiments of the present invention, the plurality of dark images may be obtained from the image sensor while this image sensor is shielded from exposure. In a method according to embodiments of the present invention, the plurality of dark images may correspond to a plurality of ambient conditions. In a method according to embodiments of the present invention, this plurality of ambient conditions may comprise a plurality of controlled ambient conditions. In a method according to embodiments of the present invention, this plurality of ambient conditions may comprise ambient temperature.

In a second aspect, the present invention provides a device for dark current correction. This device comprises a memory for storing a plurality of dark images, in which the plurality of dark images is obtained from an image sensor under a plurality of ambient conditions, wherein each of this plurality of dark images corresponds to a different reference ambient temperature and/or to a different exposure time. The device also comprises an input means for receiving an image frame from the image sensor. The device further comprises a processor adapted for determining a transformation of at least one dark image out of the plurality of dark images taking into account at least one dark pixel signal in the image frame; applying the transformation to the at least one dark image to obtain a dark current frame; and for subtracting this dark current frame from the image frame. The determining of the transformation comprises selecting the at least one dark image out of the plurality of dark images taking into account the at least one dark pixel signal in the image frame, The determining of the transformation also comprises determining a plurality of difference values, in which the plurality of difference values comprises a difference value for each dark image of the plurality of dark images. This difference value is representative of a difference between the at least one dark pixel signal in the image frame and a corresponding at least one pixel signal in the dark image.

A device according to embodiments of the present invention may furthermore comprise an output means for outputting an image obtained by subtracting the dark current frame from the image frame.

In a device according to embodiments of the present invention, the transformation may comprise a linear combination of the plurality of dark images.

The present invention further provides an imaging apparatus comprising an image sensor and a device for dark current correction according to embodiments of the present invention.

The present invention also provides a computer program product for, when implemented on a processing unit associated with an image sensor, performing the method for dark current correction according to embodiments of the present invention.

The present invention also provides image data obtained through a method for dark current correction according embodiments of the present invention.

It is an advantage of embodiments of the present invention that nonlinear dependencies of dark current levels on external conditions may be accounted for.

It is an advantage of embodiments of the present invention that dark current correction may be provided in particular for shutterless cameras, e.g. image sensors in an imaging apparatus lacking a mechanical shutter for obscuring the image sensor.

It is an advantage of embodiments of the present invention that a dark current component may be estimated with simple means and methods regardless of a complex and not explicitly modeled dependency on external factors of the dark current.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

These and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 illustrates a method according to embodiments of a first aspect of the present invention.
FIG. 2 shows a schematic overview of a device according to embodiments of a second aspect of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments:

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention is referred to an image sensor, reference is made to a device which converts radiation, for example visible light, infrared radiation, ultraviolet radiation or X-ray radiation, to a signal or plurality of signals, e.g. by photoelectric conversion, in order to encode a spatial distribution of a property of this radiation, e.g. intensity as function of location on an imaging plane of the image sensor. Such image sensor may typically comprise a plurality of pixel elements, e.g. arranged in an array, for determining this property of the radiation at a plurality of locations. For example, an image sensor may comprise a charged coupled device (CCD), which accumulates a small electrical charge in a pixel element when light impinges on this element. These accumulated charges may be converted to a voltage during a read-out phase, e.g. in which all pixel elements are read out sequentially. Additional circuitry may be provided to further encode these voltage levels into digital information. In another example, an image sensor may comprise a complementary metal oxide semiconductor (CMOS) imaging chip, a type of active pixel sensor made using the CMOS semiconductor process. In a CMOS imaging sensor, each pixel element, e.g. photosensor, is provided with integrated semiconductor circuitry, e.g. in the immediate vicinity of the pixel element, to convert the light energy received by the pixel element to a voltage for read-out. This reduces the electrical path length between the pixel element and read-out circuitry compared to a CCD sensor, but increases the manufacturing complexity.

Where in embodiments of the present invention reference is made to dark current correction, reference is made to adjusting image data in order to reduce or remove non-uniform structured noise, e.g. fixed-pattern noise, in the image data. Such non-uniform structured noise may be attributable to leakage currents in the pixel elements, e.g. pixel elements of a sensor array. This noise component is systematic, e.g. present even in the absence of sensor exposure, and non-uniform, e.g. may differ between individual sensor elements.

Where in embodiments of the present invention reference is made to a dark frame, reference is made to a reference image obtained by an image sensor in a substantially unexposed state, e.g. in a state wherein exposure of the sensor to radiation, of the radiation quality the pixel elements of the image sensor are sensitive to, is at a negligible level, e.g. below a detection limit.

In a first aspect, the present invention relates to a method for dark current correction. Such method may be used to perform dark current correction for an image sensor, for example in digital still image photography or in digital video capture of dynamic scenes. The method comprises obtaining a plurality of dark images from the image sensor at different environmental conditions such as e.g. temperatures and/or at different acquisition settings such as e.g. at different exposure times; obtaining an image frame from the image sensor; determining a transformation of at least one dark image out of the plurality of dark images taking into account at least one dark pixel signal in the image frame, applying this transformation to the at least one dark image to obtain a dark current frame and subtracting this dark current frame from the image frame to obtain a dark current corrected image frame.

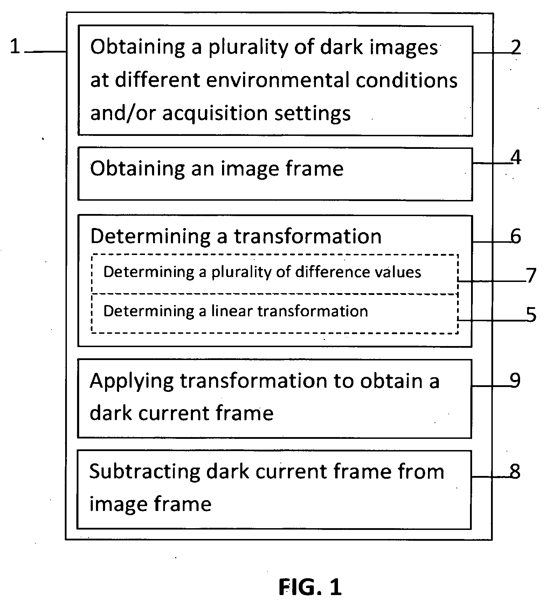

Referring to FIG. 1, an exemplary method 1 according to the first aspect of the present invention is shown. This exemplary method 1 may be a method for dark current subtraction in images, e.g. digital images, obtained from an image sensor, e.g. a digital sensor array. The image sensor may for example comprise a charged coupled device or active pixel sensor, and may form a component of an imaging apparatus, for example a digital still image camera or a digital video camera. Such image sensor may provide a spatially discretized representation of a scene, for example a plurality of digital signals corresponding to an array of pixel elements, each pixel element being sensitive to incident radiation, e.g. light, at a predetermined location in the image sensor, e.g.. corresponding to radiation received from a specific region of a scene being imaged.

The method 1 comprises the step of obtaining 2 a plurality of dark images from the image sensor. This plurality of dark images may be obtained while the image sensor is shielded from exposure. The plurality of dark images may be obtained by closing a shutter of an imaging apparatus in which the image sensor is integrated, e.g. to shield the image sensor from exposure. However, in advantageous embodiments, this plurality of dark images may be obtained during assembly of the imaging apparatus or prior to installation of the image sensor in an imaging apparatus. The image sensor may therefore be integrated in an imaging apparatus which does not require a means for shielding the image sensor from exposure, e.g. a shutterless camera. This plurality of dark images may correspond to a plurality of ambient conditions, e.g. may be obtained under different ambient conditions, for example at different temperatures, and/or they may correspond to a plurality of acquisition settings, e.g. they may be obtained during different exposure times. Each of the plurality of dark images may therefore correspond to a different reference ambient temperature and/or to a different exposure time. It may be an advantage of embodiments of the present invention that a plurality of dark images may be obtained under controlled ambient conditions, e.g. while ambient temperature is varied over a predetermined set of reference temperatures, and/or exposure times, e.g. different time intervals of a predetermined set of reference exposure times in which, for example, electric charge is allowed to accumulate in pixel elements of the image sensor.

Furthermore, each of the plurality of dark images may correspond to a different combination of reference ambient conditions, e.g. ambient temperature, and acquisition settings, e.g. exposure time. Each of the plurality of dark images may be obtained by aggregating, e.g. averaging, a plurality of similar images obtained under such combination of conditions, e.g. in which these similar images differ only in a random noise component, while each image in this plurality of similar images may be acquired by the image sensor at substantially the same ambient conditions, e.g. ambient temperature, and acquisition settings, e.g. exposure time. It may therefore be an advantage of embodiments of the present invention that a plurality of dark images may be obtained which allow estimation of a structural noise component, e.g. a systematic error component, while being robust under random noise influences.

This plurality of dark images may be stored in a memory of the imaging apparatus or stored on a data carrier, for example for loading into a removable memory dock of an imaging apparatus or in an external image processing device, e.g. a computer with photographic editing and/or enhancement software. For example, the image sensor may provide a set of $K$ dark images $\{D^k|k=1,...,K\}$, each dark image $D^k$ comprising $N \times M$ pixel values $D_i^k$, with $i=1,...,N \times M$, for example corresponding to a rectilinear discretization of an planar image into N rows and M columns.

The method 1 further comprises obtaining 4 an image frame from the image sensor. This image frame may comprise a digital representation of the plurality of signals obtained by, for example, a photoelectric conversion in each of the pixel elements of the image sensor. The image frame may be represented by a list of pixel values $I_i$, with $i=1,...,N \times M$, e.g. a set of values ordered in a predetermined number of rows $N$ and columns $M$.

The method 1 further comprises determining 6 a transformation of at least one dark image out of the obtained plurality of dark images taking into account at least one dark pixel signal in the image frame. The method 1 also comprises applying 9 this transformation to the at least one dark image to obtain a dark current frame. For example, the at least one dark pixel signal in the image frame may correspond to a signal obtained from at least one pixel element of the image sensor which is not exposed to a detectable amount of radiation while the image frame is obtained. Such at least one pixel element may correspond to a region of the image sensor which remains optically black, e.g. by occluding incident radiation from this region during exposure. In particular embodiments of an imaging apparatus in which the image sensor is integrated, a predetermined number of pixel rows and/or columns of the image sensor may be reserved for providing such at least one dark pixel signal. The at least one dark pixel signal may correspond to predetermined pixel values in the image frame, e.g. lj, with j=1,...,L, in which L<NxM represents a number of dark pixel signals, while pixel values lj with j=L+1,..., NxM may correspond to the remaining pixels in the image, e.g. pixel elements encoding a scene captured by the image sensor. It will be clear that this particular ordering of the values associated with the dark pixel signals and remaining pixels in the image need not be related to a physical ordering of these pixel elements in the image sensor, and may merely constitute a mathematical formalism hereby introduced for the sake of clarity.

This determining 6 of a transformation may comprise determining 7 a plurality of difference values, each difference value being representative of a difference between the at least one dark pixel signal in the image frame and a corresponding at least one pixel signal in one of the plurality of dark images. Thus, a set of difference values $\Delta_k$, for k=1,...,K, may be determined by computing a mean, median, sum or other statistical central measure of a pairwise difference or other suitable comparative measure, e.g. a measure representing a mathematical directed distance. For example $\Delta_k$. $L$ for

k=1,...,K, may be computed as $\Delta_k = \sum_{j=1}^{L} (I_j - D_j^k)$ . =

Alternatively, a set of difference values $\Delta_k$, for $k=1,...,K$, may be determined by computing a difference of the means, medians or other statistical central measures of the at least one dark pixel signal in the image frame on one hand and the corresponding at least one pixel signal in a dark image $D^k$ on the other hand. For example $\Delta_k$, for k=1,...,K, may be computed as

$$\Delta_k = \sum_{j=1}^{L} I_j - \sum_{j=1}^{L} D_j^k .$$

Determining 6 of the transformation may comprise selecting the at least one dark image out of said plurality of dark images taking into account the at least one dark pixel signal in said image frame, for example, selecting the one dark image Dik' corresponding to the difference value closest to zero, e.g. such that

$$k' = \arg \min_{k=1,...,K} \|\Delta_k\|$$

.

Determining 6 of the transformation may furthermore comprise determining 5 a pixelwise linear transformation of the at least one dark image taking into account the at least one dark pixel signal in the image frame. For example, a gain correction, e.g. a linear scaling, may be applied to the selected dark image $D_i^{k'}$. For such a linear scaling, the transformation may be expressed by a multiplicative factor $\alpha$, which may for example be de-

termined by $\alpha = \dfrac{\sum\limits_{j=1}^{L} I_j}{\sum\limits_{j=1}^{L} D_j^{k'}}$ . Applying 9 the transformation to the selected dark image may therefore comprise calculating each pixel value of the dark current frame by multiplication of the factor $\alpha$ with the corresponding pixel of the selected dark image $D_i^{k'}$, e.g. such that

$$C_i = \alpha D_i^{k'} \text{ for } i=1,...,N \times M.$$

In particular embodiments, the determining 6 of the transformation may comprise determining a combination of at least two of said plurality of dark images taking into account at least one dark pixel signal. Determining this combination may comprise determining a linear combination of at least two of the plurality of dark images. This linear combination may comprise a linear interpolation between two dark images $D_i^{k'}$, $D_i^{k''}$ selected from the plurality of dark images, for example selected taking into account the plurality of difference values, e.g. such

that $\quad k' = \underset{k\in\{k=1,...,K \mid \Delta_k \leq 0\}}{\arg\min} \left\|\Delta_k\right\| \quad$ and

$k'' = \underset{k\in\{k=1,...,K \mid \Delta_k > 0\}}{\arg\min} \left\|\Delta_k\right\|$ . Therefore, the combination may form an image comprising pixel values $C_i$, for $i=1,...,N \times M$, obtained by linearly interpolating between the two selected dark images $D^{k'}$ and $D^{k''}$, e.g. by calculating for each pixel the corresponding value

$$C_i = D_i^{k'} + \frac{\Delta_{k'}}{\Delta_{k''} - \Delta_{k'}}(D_i^{k'} - D_i^{k''}) .$$

Alternatively, the linear combination may be a linear combination involving more than two dark images. For example, this linear combination may be determined by a least squares method, e.g. the combination may be represented by $\mathbf{C} = \mathbf{D}\alpha$, in which $C$ is a column vector composed of the pixel values $C_i$ determined by the matrix product of a $(N \times M) \times K$ matrix $\mathbf{D}=[D_i^k]_{i=1,...,N \times M; \; k=1,...,K}$ composed of the dark image values $D_i^k$ and a column vector $\alpha$ composed of K weights associated with the plurality of dark images. The weights $\alpha$ may be determined by, for example, computing a matrix product of a pseudoinverse, e.g. a Moore-Penrose pseudoinverse, of the reduced LxK matrix $\mathbf{D'}=[D_j^k]_{j=1,...,L; \; k=1,...,K}$ and the column matrix of dark pixel signals in the image frame $I'=[I_j]_{j=1,...,L}$, e.g. $\alpha = (\mathbf{D'}^T \mathbf{D'})^{-1} \mathbf{D'}^T I'$. It will be obvious to the person skilled in the art that, instead of a least squares method, other optimization techniques for determining a linear combination which minimizes a cost function may be used, such as, for example, a regularized least squares method or a support vector machine (SVM) method. Alternatively, a non-linear combination may be determined using optimization techniques, e.g. involving quadratic, cubic or higher order polynomial transformations, logarithmic or exponential transformations or trigonometric or hyperbolic transformations.

The method 1 furthermore comprises the step of subtracting 8 this dark current frame from the image frame, e.g. in order to remove or reduce the dark current component in the image frame. Furthermore, the method 1 may comprise obtaining at least one further image frame and subtracting the already obtained dark current frame from the or each further image frame in order to remove or reduce the dark current component in the or each further image frame. It may therefore be an advantage of embodiments of the present invention that the dark current component in a series of image frames, e.g. a predetermined number of consecutive frames in a video capture sequence, may be removed or reduced by reusing a single dark current frame.

Steps of a method 1 according to the first aspect of the present invention may be implemented in a computing device such as a computer or integrated programmable microprocessor device. Particularly, the steps of determining 6 a combination of the plurality of dark images and subtracting 8 this combination from the image frame may be performed by a computing device, for example by a microprocessor integrated together with the image sensor in an imaging apparatus, e.g. a digital camera.

The present invention also includes a computer program product which provides the functionality of a method according to embodiments of the present invention when executed on a computing device associated with an imaging apparatus. Such computer program product can be tangibly embodied in a carrier medium carrying machine-readable code for execution by a computing device such as a programmable processor. The present invention thus relates to a carrier medium carrying a computer program product that, when executed on computing a means, provides instructions for executing any of the methods as described above. The term "carrier medium" refers to any medium that participates in providing instructions to a processor for execution. Such a medium may take many forms, including but not limited to, non-volatile media and transmission media. Non volatile media include, for example, optical or magnetic disks, such as a storage device which is part of mass storage. Common forms of computer readable media include, a CD-ROM, a DVD, a flexible disk or floppy disk, a memory key, a tape, a flash disk such as an MMC card, an SD card, a mini SD card or a micro SD card, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

In a second aspect, the present invention relates to a device for dark current correction. This device comprises a memory for storing a plurality of dark images, in which this plurality of dark images is obtained from an image sensor. The device further comprises an input means for receiving an image frame from said image sensor, and a processor. The processor is adapted for determining a transformation of at least one dark image out of the plurality of dark images taking into account at least one dark pixel signal in the received image frame, applying this transformation to the at least one dark image to obtain a dark current frame and subtracting this dark current frame from the image frame.

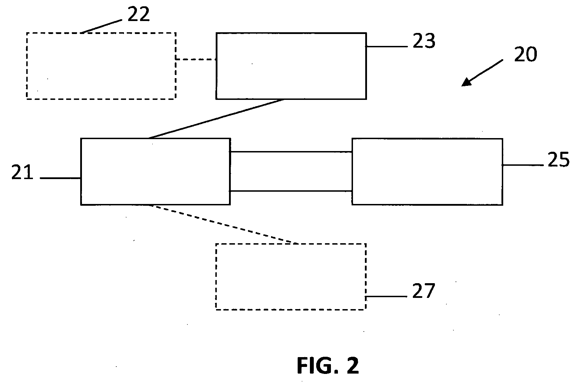

Referring to FIG. 2, an embodiment of a device 20 according to this second aspect of the present invention is shown. This device 20 comprises a memory 21 for storing a plurality of dark images, in which this plurality of dark images is obtained from an image sensor 22. This memory may comprise a random access memory (RAM), a read-only memory (ROM), a flashable memory, e.g. a removable flash memory card, or a magnetic storage device, such as a removable or integrated magnetic data disk.

The device 20 further comprises an input means 23 for receiving an image frame from said image sensor 22. For example, the device 20 may receive an electronic signal from the image sensor 22, e.g. a pulse width modulated signal, for example via a local networking bus interface. Alternatively, the device 20 may receive the image frame from the image sensor 22 via a radio receiver, e.g. through a wireless network, optical signal transmission, e.g. via an optical fiber, or indirectly by means of a data carrier, e.g. a magnetic disk or a flash memory card.

The device 20 further comprises a processor 25. The processor 25 is adapted for determining a transformation of at least one dark image out of the plurality of dark images taking into account at least one dark pixel signal in the received image frame, for applying this transformation to the at least one dark image to obtain a dark current frame and for subtracting this dark current frame from the image frame to obtain a dark current corrected image frame. Particularly, the processor 25 may be programmed for carrying out this determining of a transformation, this applying of the transformation and this subtracting by implementing steps of a method as described hereinabove in relation to the first aspect of the present invention.

The device 20 may furthermore comprise an output means 27 for outputting an image obtained by subtracting the combination of the plurality of dark images from the image frame.

In a third aspect, the present invention relates to an imaging apparatus comprising an image sensor and a device according to the second aspect of the invention.

In a further aspect, the present invention relates to a computer program product for, if implemented on a processing unit, such as a processor in a device according to the second aspect of the present invention, performing a method for dark current correction according to the first aspect of the present invention. The present invention further relates to image data obtained through a method for dark current correction according to the first aspect of the present invention.

**Claims**

1. A method (1) for dark current correction, the method (1) comprising:

   - obtaining (2) a plurality of dark images from an image sensor, wherein said plurality of dark images correspond to a plurality of ambient conditions, wherein each of said plurality of dark images corresponds to a different reference ambient temperature and/or to a different exposure time,
   - obtaining (4) an image frame from said image sensor,
   - determining (6) a transformation of at least one dark image out of said plurality of dark images taking into account at least one dark pixel signal in said image frame, wherein said determining (6) of said transformation comprises selecting said at least one dark image out of said plurality of dark images taking into account the at least one dark pixel signal in said image frame, applying (9) said transformation to said at least one dark image to obtain a dark current frame, and
   - subtracting (8) said dark current frame from the image frame to obtain a dark current corrected image frame,

   **characterized in that** said determining (6) of said transformation comprises determining (7) a plurality of difference values, in which the plurality of difference values comprises a difference value for each dark image of said plurality of dark images, said difference value being representative of a difference between said at least one dark pixel signal in said image frame and a corresponding at least one pixel signal in said dark image.

2. The method (1) according to any of the previous claims, wherein said determining (6) of said transformation comprises determining (5) a pixelwise linear transformation of the at least one dark image taking into account the at least one dark pixel signal in said image frame.

3. The method (1) according to any of the previous claims, wherein said determining (6) of said transformation comprises determining a combination of at least two of said plurality of dark images taking into account the at least one dark pixel signal.

4. The method (1) according to any of the previous claims, wherein said plurality of dark images are obtained (2) from said image sensor while said image sensor is shielded from exposure.

5. The method (1) according to any of the previous claims, wherein said plurality of ambient conditions comprises a plurality of controlled ambient conditions.

6. The method (1) according to any of the previous claims, wherein said plurality of ambient conditions comprises ambient temperature.

7. A device (20) for dark current correction, the device comprising:

   - a memory (21) for storing a plurality of dark images, said plurality of dark images obtained from an image sensor (22) under a plurality of ambient conditions, wherein each of said plurality of dark images corresponds to a different reference ambient temperature and/or to a different exposure time,
   - an input means (23) for receiving an image frame from said image sensor (22), and
   - a processor (25) adapted for determining a transformation of at least one dark image out of said plurality of dark images taking into account at least one dark pixel signal in said image frame, for applying said transformation to said at least one dark image to obtain a dark current frame, and for subtracting said dark current frame from the image frame, wherein said determining of said transformation comprises selecting said at least one dark image out of said plurality of dark images taking into account the at least one dark pixel signal in said image frame,

   **characterized in that** said determining of said transformation comprises determining a plurality of difference values, in which the plurality of difference values comprises a difference value for each dark image of said plurality of dark images, said difference value being representative of a difference between said at least one dark pixel signal in said image frame and a corresponding at least one pixel signal in said dark image.

8. The device (20) according to claim 7, furthermore comprising an output means (27) for outputting an image obtained by subtracting the dark current frame from the image frame.

9. The device (20) according to any of claims 7 to 8, wherein said transformation comprises a linear combination of said plurality of dark images.

10. An imaging apparatus comprising an image sensor (22) and a device (20) for dark current correction according to any of claims 7 to 9.

11. A computer program product for, if implemented on a processing unit associated with an image sensor, performing the method for dark current correction according to any of claims 1 to 6.

**Patentansprüche**

1. Verfahren (1) zur Dunkelstromkorrektur, wobei das Verfahren (1) Folgendes umfasst:

   - Erhalten (2) einer Vielzahl von Dunkelaufnahmen von einem Bildsensor, wobei die Vielzahl von Dunkelaufnahmen einer Vielzahl von Umgebungsbedingungen entspricht, wobei jede von der Vielzahl von Dunkelaufnahmen einer unterschiedlichen Referenzumgebungstemperatur und/oder einer unterschiedlichen Belichtungszeit entspricht,
   - Erhalten (4) eines Einzelbilds vom Bildsensor,
   - Bestimmen (6) einer Umwandlung von mindestens einer Dunkelaufnahme aus der Vielzahl von Dunkelaufnahmen unter Berücksichtigung von mindestens einem Dunkelpixelsignal in dem Einzelbild, wobei das Bestimmen (6) der Umwandlung das Auswählen der mindestens einen Dunkelaufnahme aus der Vielzahl von Dunkelaufnahmen unter Berücksichtigung des mindestens einen Dunkelpixelsignals in dem Einzelbild umfasst, Anwenden (9) der Umwandlung auf die mindestens eine Dunkelaufnahme, um ein Dunkelstrombild zu erhalten, und
   - Subtrahieren (8) des Dunkelstrombilds vom Einzelbild, um ein dunkelstromkorrigiertes Einzelbild zu erhalten,

   **dadurch gekennzeichnet, dass** das Bestimmen (6) der Umwandlung das Bestimmen (7) einer Vielzahl von Differenzwerten umfasst, wobei die Vielzahl von Differenzwerten einen Differenzwert für jede Dunkelaufnahme aus der Vielzahl von Dunkelaufnahmen umfasst, wobei der Differenzwert für eine Differenz zwischen dem mindestens einen Dunkelpixelsignal in dem Einzelbild und einem entsprechenden mindestens einen Pixelsignal in der Dunkelaufnahme bezeichnend ist.

2. Verfahren (1) nach einem der vorhergehenden Ansprüche, wobei das Bestimmen (6) der Umwandlung das Bestimmen (5) einer pixelweisen linearen Umwandlung der mindestens einen Dunkelaufnahme unter Berücksichtigung des mindestens einen Dunkelpixelsignals in dem Einzelbild umfasst.

3. Verfahren (1) nach einem der vorhergehenden Ansprüche, wobei das Bestimmen (6) der Umwandlung das Bestimmen einer Kombination von mindestens zwei aus der Vielzahl von Dunkelaufnahmen unter Berücksichtigung des mindestens einen Dunkelpixelsignals umfasst.

4. Verfahren (1) nach einem der vorhergehenden Ansprüche, wobei die Vielzahl von Dunkelaufnahmen von dem Bildsensor erhalten (2) wird, während der Bildsensor vor Belichtung geschützt ist.

5. Verfahren (1) nach einem der vorhergehenden Ansprüche, wobei die Vielzahl von Umgebungsbedingungen eine Vielzahl von kontrollierten Umgebungsbedingungen umfasst.

6. Verfahren (1) nach einem der vorhergehenden Ansprüche, wobei die Vielzahl von Umgebungsbedingungen eine Umgebungstemperatur umfasst.

7. Vorrichtung (20) zur Dunkelstromkorrektur, wobei die Vorrichtung Folgendes umfasst:

   - einen Speicher (21) zum Speichern einer Vielzahl von Dunkelaufnahmen, wobei die Vielzahl von Dunkelaufnahmen von einem Bildsensor (22) unter einer Vielzahl von Umgebungsbedingungen erhalten wird, wobei jede von der Vielzahl von Dunkelaufnahmen einer unterschiedlichen Referenzumgebungstemperatur und/oder einer unterschiedlichen Belichtungszeit entspricht,
   - ein Eingangsmittel (23) zum Empfangen eines Einzelbilds von dem Bildsensor (22), und
   - einen Prozessor (25), der angepasst ist zum Bestimmen einer Umwandlung von mindestens einer Dunkelaufnahme aus der Vielzahl von Dunkelaufnahmen unter Berücksichtigung von mindestens einem Dunkelpixelsignal in dem Einzelbild, zum Anwenden der Umwandlung auf die mindestens eine Dunkelaufnahme, um ein Dunkelstrombild zu erhalten, und zum Subtrahieren des Dunkelstrombilds vom Einzelbild, wobei das Bestimmen der Umwandlung das Auswählen der mindestens einen Dunkelaufnahme aus der Vielzahl von Dunkelaufnahmen unter Berücksichtigung des mindestens einen Dunkelpixelsignals in dem Einzelbild umfasst,

   **dadurch gekennzeichnet, dass** das Bestimmen der Umwandlung das Bestimmen einer Vielzahl von Differenzwerten umfasst, wobei die Vielzahl von Differenzwerten einen Differenzwert für jede Dunkelaufnahme aus der Vielzahl von Dunkelaufnahmen umfasst, wobei der Differenzwert für eine Differenz zwischen dem mindestens einen Dunkelpixelsignal in dem Einzelbild und einem entsprechenden mindestens einen Pixelsignal in der Dunkelaufnahme bezeichnend ist.

8. Vorrichtung (20) nach Anspruch 7, ferner umfassend ein Ausgangsmittel (27) zum Ausgeben eines Bilds, das durch Subtrahieren des Dunkelstrombilds von dem Einzelbild erhalten wird.

9. Vorrichtung (20) nach einem der Ansprüche 7 bis 8, wobei die Umwandlung eine lineare Kombination von der Vielzahl von Dunkelaufnahmen umfasst.

10. Bildgebendes Gerät, umfassend einen Bildsensor (22) und eine Vorrichtung (20) zur Dunkelstromkorrektur nach einem der Ansprüche 7 bis 9.

11. Computerprogrammprodukt, falls implementiert auf einer Verarbeitungseinheit in Verbindung mit einem Bildsensor, zum Durchführen des Verfahrens zur Dunkelstromkorrektur nach einem der Ansprüche 1 bis 6.

**Revendications**

1. Un procédé (1) de correction de courant d'obscurité, le procédé (1) comprenant :

   - l'obtention (2) d'une pluralité d'images sombres à partir d'un capteur d'images, où ladite pluralité d'images sombres correspond à une pluralité de conditions ambiantes, où chaque image de ladite pluralité d'images sombres correspond à une température ambiante de référence différente et/ou à une durée d'exposition différente,
   - l'obtention (4) d'une trame d'image à partir dudit capteur d'images,
   - la détermination (6) d'une transformation d'au moins une image sombre de ladite pluralité d'images sombres par la prise en compte d'au moins un signal de pixel sombre dans ladite trame d'image, où ladite détermination (6) de ladite transformation comprend la sélection de ladite au moins une image sombre de ladite pluralité d'images sombres par la prise en compte du au moins un signal de pixel sombre dans ladite trame d'image, l'application (9) de ladite transformation à ladite au moins une image sombre de façon à obtenir une trame de courant d'obscurité, et
   - la soustraction (8) de ladite trame de courant d'obscurité de la trame d'image de façon à obtenir une trame d'image à courant d'obscurité corrigé,

**caractérisé en ce que** ladite détermination (6) de ladite transformation comprend la détermination (7) d'une pluralité de valeurs de différence, la pluralité de valeurs de différence comprenant une valeur de différence pour chaque image sombre de ladite pluralité d'images sombres, ladite valeur de différence étant représentative d'une différence entre ledit au moins un signal de pixel sombre dans ladite trame d'image et au moins un signal de pixel correspondant dans ladite image sombre.

2. Le procédé (1) selon l'une quelconque des Revendications précédentes, où ladite détermination (6) de ladite transformation comprend la détermination (5) d'une transformation linéaire pixel par pixel de la au moins une image sombre par la prise en compte du au moins un signal de pixel sombre dans ladite trame d'image.

3. Le procédé (1) selon l'une quelconque des Revendications précédentes, où ladite détermination (6) de ladite transformation comprend la détermination d'une combinaison d'au moins deux images de ladite pluralité d'images sombres par la prise en compte du au moins un signal de pixel sombre.

4. Le procédé (1) selon l'une quelconque des Revendications précédentes, où ladite pluralité d'images sombres est obtenue (2) à partir dudit capteur d'images pendant que ledit capteur d'images est protégée contre une exposition.

5. Le procédé (1) selon l'une quelconque des Revendications précédentes, où ladite pluralité de conditions ambiantes comprend une pluralité de conditions ambiantes régulées.

6. Le procédé (1) selon l'une quelconque des Revendications précédentes, où ladite pluralité de conditions ambiantes comprend une température ambiante.

7. Un dispositif (20) de correction de courant d'obscurité, le dispositif comprenant :

- une mémoire (21) destinée à la conservation en mémoire d'une pluralité d'images sombres, ladite pluralité d'images sombres étant obtenues à partir d'un capteur d'images (22) dans une pluralité de conditions ambiantes, où chaque image de ladite pluralité d'images sombres correspond à une température ambiante de référence différente et/ou à une durée d'exposition différente,
- un moyen d'entrée (23) destiné à la réception d'une trame d'image à partir dudit capteur d'images (22), et

- un processeur (25) adapté de façon à déterminer une transformation d'au moins une image sombre de ladite pluralité d'images sombres par la prise en compte d'au moins un signal de pixel sombre dans ladite trame d'image, de façon à appliquer ladite transformation à ladite au moins une image sombre de façon à obtenir une trame de courant d'obscurité et à sosutraire ladite trame de courant d'obscurité de la trame d'image, où ladite détermination de ladite transformation comprend la sélection de ladite au moins une image sombre de ladite pluralité d'images sombres par la prise en compte du au moins un signal de pixel sombre dans ladite trame d'image,

**caractérisé en ce que** ladite détermination de ladite transformation comprend la détermination d'une pluralité de valeurs de différence, la pluralité de valeurs de différence comprenant une valeur de différence pour chaque image sombre de ladite pluralité d'images sombres, ladite valeur de différence étant représentative d'une différence entre ledit au moins un signal de pixel sombre dans ladite trame d'image et au moins un signal de pixel correspondant dans ladite image sombre.

8. Le dispositif (20) selon la Revendication 7, comprenant en outre un moyen de sortie (27) destiné à la production en sortie d'une image obtenue par la soustraction de la trame de courant d'obscurité de la trame d'image.

9. Le dispositif (20) selon l'une quelconque des Revendications 7 à 8, où ladite transformation comprend une combinaison linéaire de ladite pluralité d'images sombres.

10. Un appareil d'imagerie comprenant un capteur d'images (22) et un dispositif (20) de correction de courant d'obscurité selon l'une quelconque des Revendications 7 à 9.

11. Un produit de programme informatique destiné, s'il est mis en oeuvre sur une unité de traitement associée à un capteur d'images, à l'exécution du procédé de correction de courant d'obscurité selon l'une quelconque des Revendications 1 à 6.

1 ——

| |
|---|
| Obtaining a plurality of dark images at different environmental conditions and/or acquisition settings — 2 |
| Obtaining an image frame — 4 |
| Determining a transformation — 6 |
| Determining a plurality of difference values — 7 |
| Determining a linear transformation — 5 |
| Applying transformation to obtain a dark current frame — 9 |
| Subtracting dark current frame from image frame — 8 |

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6714241 B
- WO 9962023 A
- WO 2005073682 A
- US 20080231725 A